Europäisches Patentamt

European Patent Office

Office européen des brevets

(11) Veröffentlichungsnummer : **0 056 847**
**B1**

(12) # EUROPÄISCHE PATENTSCHRIFT

(45) Veröffentlichungstag der Patentschrift :
07.08.85

(21) Anmeldenummer : 81108963.0

(22) Anmeldetag : 27.10.81

(51) Int. Cl.⁴ : **B 62 D 43/04**

(54) **Vorrichtung zum Entnehmen und Einbringen eines bei Kippern auf LKW-Fahrzeugen unter der Kippbrücke untergebrachten Reserverades.**

(30) Priorität : 23.01.81 DE 3102205

(43) Veröffentlichungstag der Anmeldung :
04.08.82 Patentblatt 82/31

(45) Bekanntmachung des Hinweises auf die Patenterteilung : 07.08.85 Patentblatt 85/32

(84) Benannte Vertragsstaaten :
**AT BE CH DE FR GB IT LI LU NL SE**

(56) Entgegenhaltungen :
DE-C- 1 914 591

(73) Patentinhaber : **Ringfeder G.m.b.H.**
**Duisburger Strasse 145**
**D-4150 Krefeld-Uerdingen (DE)**

(72) Erfinder : **Der Erfinder hat auf seine Nennung**
**verzichtet**

**Beschreibung**

Die Erfindung betrifft eine Vorrichtung zum Entnehmen und Einbringen eines bei Kippern auf LKW-Fahrzeugen unter der Kippbrücke untergebrachten Reserverades, im wesentlichen bestehend aus einem Hebelarm, der an dem einen Ende fahrzeugseitig drehbar gelagert ist und an dem anderen Ende eine Seillaufführung für eine mit einer Seilwinde versehene Hubvorrichtung aufweist.

Bei einer nach der DE-A-19 14 591 bekannten Vorrichtung der gattungsgemäßen Art weist ein winkeliger Hebelarm an seinem einen Ende einen von oben in eine am Hilfsrahmen oder Fahrgestell des Fahrzeuges ausgebildete Hülse einsteckbaren Drehzapfen und an seinem anderen Ende einen mit einer Seillaufführung versehenen Ausleger auf ; dieser Ausleger ist gegenüber dem Hebelarm verschiebbar angeordnet oder an dem Hebelarm verschwenkbar befestigt. Außerdem sind die größten Abmessungen der Vorrichtung bei eingezogenem oder eingeschwenktem Ausleger kleiner als die Abmessungen des von dem Reserverad umschlossenen Hohlraumes. Demnach kann die Vorrichtung vom Hilfsrahmen/Fahrgestell abgenommen und im Innenraum des Reserverades untergebracht werden ; in der Praxis wird dabei ein Kunststoffsack zum Schutz der Vorrichtung angewandt. Wenngleich mit dieser Vorrichtung im wesentlichen eine praktische Ausnutzung des sonst auch beispielsweise zum Unberbringen von Schneeketten genutzten Innenraumes eines Reserverades gegeben ist, so liegt doch nachteilig die Gefahr von Personenschäden infolge der notwendigen manuellen Vorrichtungen beim Verschieben/Verschwenken des Auslegers sowie beim Einstecken und Herausheben der nach ihrem Aufbau recht schweren Vorrichtung aus der fahrzeugseitigen Hülse vor. Überdies besteht die Möglichkeit, daß die Fahrzeuge im Betrieb nicht mit dieser Vorrichtung ausgerüstet sind, was gegen einschlägige Vorschriften der Straßenverkehrs-Zulassungs-Ordnung verstoßen würde.

Der Erfindung liegt demnach die Aufgabe zugrunde, die zu der bekannten Vorrichtung aufgezeigten Nachteile aufzuheben, insbesondere also eine Vorrichtung zu schaffen, die unfallsicherer ist, ein Minimum an Bedienungsaufwand erfordert und den angeführten Vorschriften genügt.

Diese Aufgabe wird erfindungsgemäß dadurch gelöst, daß die fahrzeugseitige Drehlagerung des einteilig ausgebildeten Hebelarmes an der Kippbrücke befestigt und derart angeordnet ist, daß bei zum Entnehmen/Einbringen des Reserverades angehobener Kippbrücke die Drehachse der Drehlagerung rechtwinklig zur Ebene des Fahrgestells des Fahrzeugs steht.

Eine in ihrem Aufbau einfache, gewichtlich und insbesondere bei beengten Raumverhältnissen günstige Ausgestaltung nach der Erfindung besteht darin, daß die fahrzeugseitige Drehlagerung aus einem an der Kippbrücke angeordneten Drehzapfen und einer an dem Drehzapfen gehaltenen Buchse gebildet ist, die mit dem Hebelarm unter einem die Raumfreiheit zum Entnehmen/Einbringen des Reserverades vergrößernden Winkel verbunden ist.

Für eine gute Zugänglichkeit beim An- und Abbau der Vorrichtung an dem kippbrückenseitigen Drehzapfen kann die Buchse an dem Drehzapfen in Weiterbildung der Erfindung dadurch gehaltert werden, daß in eine von außen in die Buchse der Drehlagerung eingelassene Umfangsnut ein jeweiliger Ansatz von zwei mit dem Drehzapfen der Drehlagerung lösbar verbundenen Halbschalen eingreift.

Im Sinne einer stabilen und dennoch leichten Ausbildung der Vorrichtung sowie ihrer kompakten Bauweise sieht eine letzte Ausgestaltung der Erfindung vor, daß unterhalb der Verbindungsstelle zwischen der Buchse der Drehlagerung und dem Hebelarm eine an der Buchse und an dem Hebelarm angeschlossene, biegesteife Abstützung angebracht ist, die gleichzeitig eine Aufnahme für eine drehbar gelagerte Seilscheibe und eine damit zusammenwirkende Hubvorrichtung, z. B. eine von Hand betätigbare Sicherheitsratschen-Seilwinde, bildet, wobei die Abstützung und der Hebelarm Durchtrittsöffnungen für ein Seil der Hubvorrichtung aufweisen.

Die mit dem Gegenstand nach der Erfindung erzielbaren Vorteile bestehen insbesondere darin, daß die Vorrichtung nach dem zum Entnehmen und Einbringen des unter der Kippbrücke untergebrachten Reserverades erfolgten Anheben der Kippbrücke ohne verletzungsgefährliche Handlungen für das Fahrpersonal einsatzbereit und ganz besonders auch ständig verfügbar ist. Im weiteren ergeben sich durch die erfindungsgemäße Anordnung der Achse der Drehlagerung bei angehobener Kippbrücke vorteilhaft von Rückstellkräften freie und damit nur gewollt veränderbare Stellungen des Hebelarmes. Außerdem sind durch den einfachen Aufbau, insbesondere durch die einteilige Ausbildung des Hebelarmes und des damit verbundenen Wegfalls des vorbekannten teleskopierbaren/verschwenkbaren Auslegers Herstellung, Bedienung und Wartung der Vorrichtung verbilligt bzw. vereinfacht.

Ein Ausführungsbeispiel der Erfindung ist in der Zeichnung dargestellt und wird nachfolgend näher beschrieben. Es zeigen

Figur 1 ein LKW-Fahrzeug im Querschnitt, mit horizontaler Kippbrücke und einer an dieser Brücke befestigten Vorrichtung zum Entnehmen und Einbringen eines Reserverades,

Figur 2 das LKW-Fahrzeug nach Fig. 1 mit angehobener Kippbrücke, dabei ausgeschwenktes Reserverad gestrichelt,

Figur 3 die Teildraufsicht zu Fig. 2, unter Fortlassung der Kippbrücke,

Figur 4 die Vorrichtung und deren kippbrückenseitige Drehlagerung 1, im vergrößerten Maßstab und teilweise geschnitten.

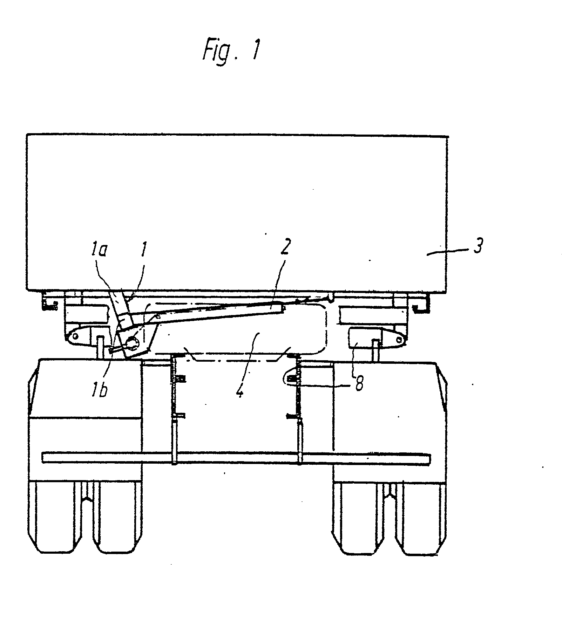

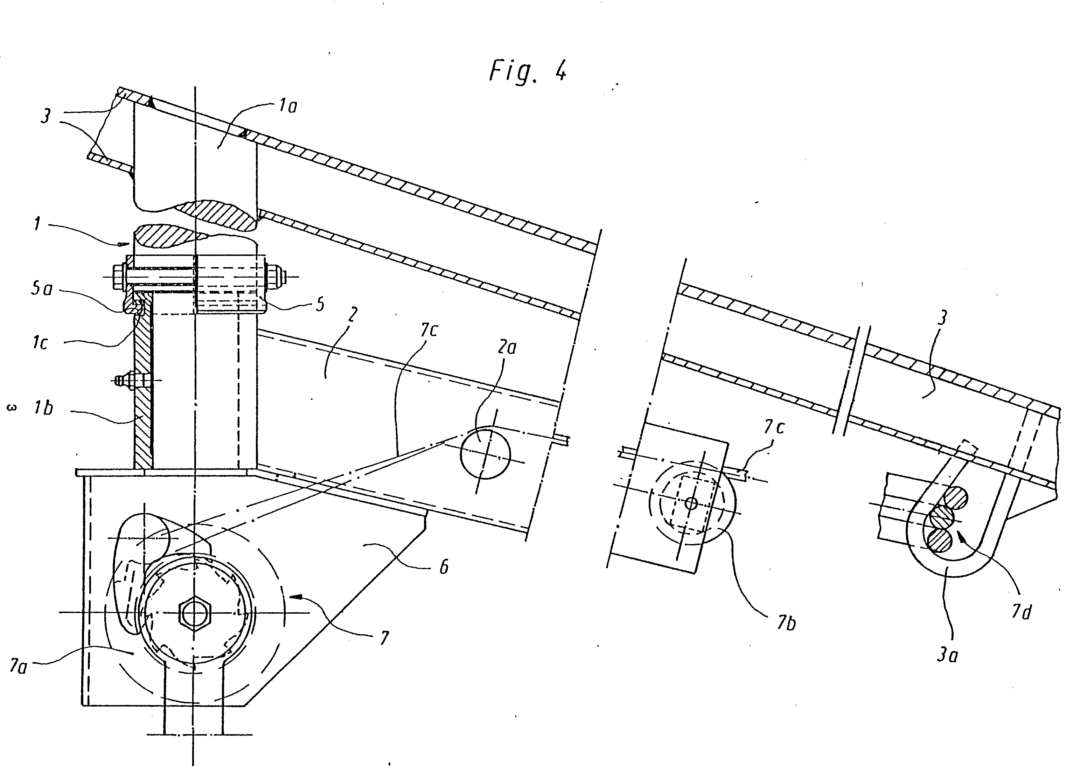

Nach den Fig. 1 bis 3 liegt unter einer Kippbrücke 3 in Fahrzeugquermitte ein Reserverad 4 auf einem am Fahrgestell angelenkten Hilfs- oder Zwischenraum 8. Am Boden der Kippbrücke 3 ist ein Drehzapfen 1a einer Drehlagerung 1 befestigt, die ausführlicher in Fig. 4 dargestellt ist. Weiter nach Fig. 1, 2 und 4 weist die Drehlagerung 1 noch eine Buchse 1b auf, die einerseits den Drehzapfen 1a umgreift und andererseits mit einem als Hohlkörper ausgebildeten, einteiligen Hebelarm 2 verbunden ist. Das andere Ende des Hebelarmes 2 ist mit einer Seillaufführung 7b für ein Seil 7c einer Hubvorrichtung 7, nach Fig. 4 eine Sicherheitsratschen-Seilwinde, versehen. Das zum Reserverad 4 hin weisende Ende des Seiles 7c ist über daran befindliche Haken 7d mit dem Reserverad 4 verbindbar. Das andere Ende des Seiles 7c ist über eine innerhalb des Hebelarmes 2 angeordnete Umlenkung, nach Fig. 4 über einen im Hebelarm 2 eingeschweißten Bolzen 2a, und über ersichtliche Durchtrittsöffnungen in dem Hebelarm 2 sowie in einer Abstützung 6 auf eine darin angeordnete Seilscheibe 7a geführt. Die Abstützung 6 liegt unterhalb der Verbindungsstelle zwischen der Buchse 1b und dem Hebelarm 2, ist mit diesen beiden Teilen verschweißt, dient zum Absteifen dieser Verbindungsstelle und, außer zur schon erwähnten Aufnahme der Seilscheibe 7a, noch zum Anbringen der Hubvorrichtung 7.

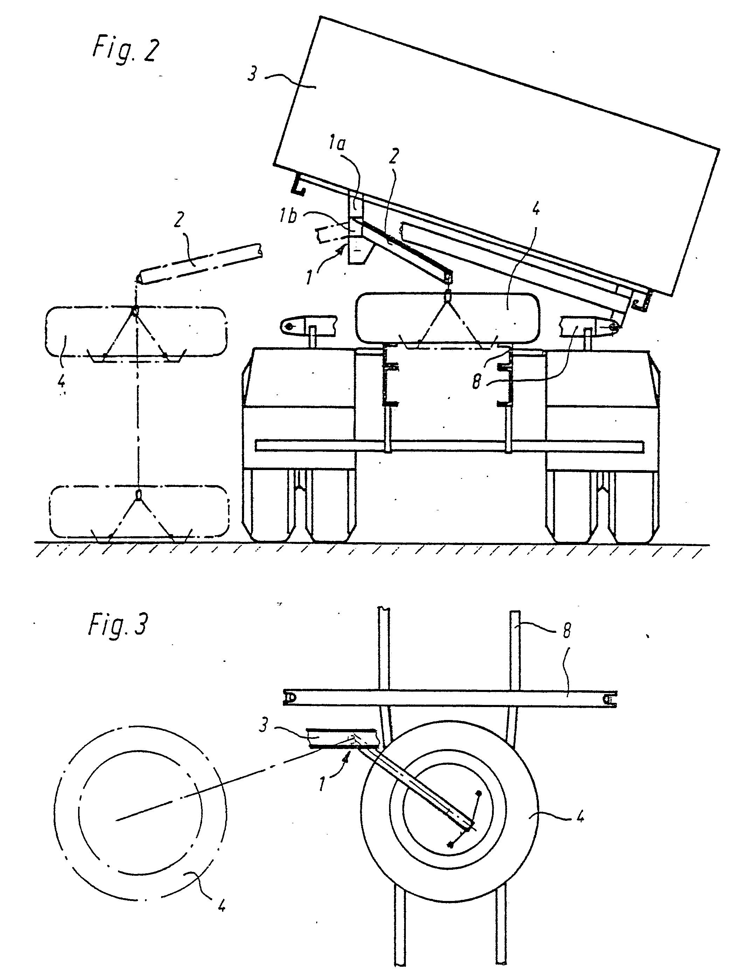

Die Drehlagerung 1 ist gemäß Fig. 1 unter einem derartigen Winkel mit der Kippbrücke 3 befestigt, daß ihre Drehachse — wie die Fig. 2 und 4 zeigen — bei angehobener Kippbrücke 3 senkrecht zum Fahrzeug steht, so daß bei angehobener Kippbrücke 3 keine Rückstellkräfte vorliegen, die Stellung des Hebelarmes 2 also nur gewollt veränderbar ist. Aus den Fig. 1, 2 und 4 wird noch ersichtlich, daß der Hebelarm 2 mit der Buchse 1b der Drehlagerung 1 unter einem die Raumfreiheit zum Entnehmen und Einbringen des Reserverades 4 vergrößernden Winkel verbunden ist.

Nach Fig. 4 weist die Buchse 1b noch eine Umfangsnut 1c auf, in die Ansätze 5a von zwei Halbschalen 5 eingreifen ; diese Halbschalen 5 umhüllen den oberen, abgesetzten Teil des Drehzapfens 1a und sind an diesem gemeinsam über eine Schraubverbindung angeschlossen. Bei Nichtgebrauch der Vorrichtung werden die Haken 7d an einer an der Kippbrücke 3 befestigten Aufhängung 3a festgelegt.

## Patentansprüche

1. Vorrichtung zum Entnehmen und Einbringen eines bei Kippern auf LKW-Fahrzeugen unter der Kippbrücke untergebrachten Reserverades (4), im wesentlichen bestehend aus einem Hebelarm (2), der an dem einen Ende fahrzeugseitig drehbar gelagert ist und an dem anderen Ende eine Seillaufführung (7b) für eine mit einer Seilwinde versehene Hubvorrichtung (7) aufweist, dadurch gekennzeichnet, daß die fahrzeugseitige Drehlagerung (1) des einteilig ausgebildeten Hebelarmes (2) an der Kippbrücke (3) befestigt und derart angeordnet ist, daß bei zum Entnehmen/Einbringen des Reserverades (4) angehobener Kippbrücke (3) die Drehachse der Drehlagerung (1) rechtwinklig zur Ebene des Fahrgestells des Fahrzeugs steht.

2. Vorrichtung nach Anspruch 1, dadurch gekennzeichnet, daß die fahrzeugseitige Drehlagerung (1) aus einem an der Kippbrücke (3) angeordneten Drehzapfen (1a) und einer an dem Drehzapfen (1a) gehalterten Buchse (1b) gebildet ist, die mit dem Hebelarm (2) unter einem die Raumfreiheit zum Entnehmen/Einbringen des Reserverades (4) vergrößernden Winkel verbunden ist.

3. Vorrichtung nach Anspruch 2, dadurch gekennzeichnet, daß in eine von außen in die Buchse (1b) der Drehlagerung (1) eingelassene Umfangsnut (1c) ein jeweiliger Ansatz (5a) von zwei mit dem Drehzapfen (1a) der Drehlagerung (1) lösbar verbundenen Halbschalen (5) eingreift.

4. Vorrichtung nach Anspruch 2 oder 3, dadurch gekennzeichnet, daß unterhalb der Verbindungsstelle zwischen der Buchse (1b) der Drehlagerung (1) und dem Hebelarm (2) eine an der Buchse (1b) und an dem Hebelarm (2) angeschlossene, biegesteife Abstützung (6) angebracht ist, die gleichzeitig eine Aufnahme für eine drehbar gelagerte Seilscheibe (7a) und eine damit zusammenwirkende Hubvorrichtung (7), z. B. eine von Hand betätigbare Sicherheitsratschen-Seilwinde, bildet, wobei die Abstützung (6) und der Hebelarm (2) Durchtrittsöffnungen für ein Seil der Hubvorrichtung (7) aufweisen.

## Claims

1. Device for removing and stowing a spare wheel (4) stored under the tilting body of tippers on lorries, substantially comprising a lever arm (2), which at the one end is pivotably mounted on the vehicle and at the other end has a cable guide (7b) for an elevating mechanism (7) provided with a cable winch, characterised in that the pivot mounting (1) of the one-piece lever arm (2) on the vehicle is secured to the tilting body (3) and arranged such that, when the tilting body (3) is raised for removing or stowing the spare wheel (4), the pivot axis of the pivot mounting (1) is at right angles to the plane of the chassis of the vehicle.

2. Device according to claim 1, characterised in that the pivot mounting (1) on the vehicle comprises a journal (1a) arranged on the tilting body (3) and a sleeve (1b) which is secured to the journal (1a) and connected to the lever arm (2) at an angle increasing the clearance for removing/stowing the spare wheel (4).

3. Device according to claim 2, characterised in that a peripheral groove (1c) on the outside of the sleeve (1b) of the pivot mounting (1) has engaging in it a respective projection (5a) of two half-shells (5) detachably connected to the journal (1a) of the pivot mounting (1).

4. Device according to claim 2 or 3, characterised in that below the connection point between the sleeve (1b) of the pivot mounting (1) and the lever arm (2) is disposed a rigid support (6), which is connected to the sleeve (1b) and the lever arm (2) and at the same time forms a receiving means for a pivotably mounted cable pulley (7a) and an elevating mechanism (7) co-operating with the latter, e. g. a manually operated safety ratchet cable winch, the support (6) and the lever arm (2) having through openings for a cable of the elevating mechanism (7).

**Revendications**

1. Dispositif pour enlever et remettre une roue de secours (4) logée, dans le cas de camions à benne basculante, sous la benne basculante, formé essentiellement d'un bras de levier (2) qui est monté par l'une de ses extrémités sur le véhicule de manière à pouvoir tourner et présente à l'autre extrémité un guide de câble (7b) destiné à un appareil de levage (7) muni d'un treuil à câble, caractérisé en ce que le montage tournant (1), sur le véhicule, du bras de levier (2) conçu en une seule pièce, est fixé à la benne basculante (3) et est disposé de telle sorte que lorsque la benne basculante (3) est soulevée pour enlever/remettre la roue de secours (4), l'axe de rotation du montage tournant (1) est perpendiculaire au plan du châssis du véhicule.

2. Dispositif selon la revendication 1, caractérisé en ce que le montage tournant (1) sur le véhicule est formé d'un tourillon (1a) disposé sur la benne basculante (3) et d'un coussinet (1b) retenu sur le tourillon (1a) et qui est relié au bras de levier (2) sous un angle augmentant la liberté d'espace pour enlever/remettre la roue de secours (4).

3. Dispositif selon la revendication 2, caractérisé en ce que dans une gorge circonférentielle (1c) ménagée de l'extérieur dans le coussinet (1b) du montage tournant (1) s'engage un appendice (5a) de chacune de deux demi-coquilles (5) reliées de façon détachable au tourillon (1a) du montage tournant (1).

4. Dispositif selon l'une des revendications 2 et 3, caractérisé en ce qu'en dessous du point de liaison entre le coussinet (1b) du montage tournant (1) et le bras de levier (2) est disposé un appui (6), rigide en flexion, raccordé au coussinet (1b) et au bras de levier (2), qui forme en même temps un logement pour une poulie à câble (7a) montée de manière à pouvoir tourner et un appareil de levage (7) coopérant avec celle-ci, par exemple un treuil à câble à cliquet de sûreté pouvant être actionné manuellement, l'appui (6) et le bras de levier (2) présentant des ouvertures de passage pour un câble de l'appareil de levage (7).

Fig. 1

Fig. 2

Fig. 3

# Fig. 4

0 056 847